Europäisches Patentamt

European Patent Office

Office européen des brevets

(11) Publication number: **0 155 043**
A1

# (12) EUROPEAN PATENT APPLICATION

(21) Application number: 85200278.1

(22) Date of filing: 28.02.85

(51) Int. Cl.⁴: **B 60 K 41/08**, B 60 K 41/28, G 05 G 9/08, F 16 H 5/66

(30) Priority: 16.03.84 IT 6724784

(43) Date of publication of application: 18.09.85 Bulletin 85/38

(84) Designated Contracting States: **DE FR GB IT SE**

(71) Applicant: **S.I.R.P. STUDI INDUSTRIALI REALIZZAZIONE PROTOTIPI S.p.A., Via A.Grandi 11, I-10024 Moncalieri (Torino) (IT)**

(72) Inventor: **Sala, Silvio, Viale Certosa, 94, I-20156 Milano (IT)**

(74) Representative: **Lotti, Giorgio, c/o Ing. Barzanò & Zanardo Milano S.p.A. Via Cernaia 20, I-10122 Torino (IT)**

(54) Automatic control unit for controlling the gearbox of a vehicle.

(57) An automatic control unit for controlling the gearbox of a vehicle (20) is applied to a clash gear or constant mesh gearbox of conventional type and in which the selection of the neutral position, the reverse movement position and the first speed position is controlled manually; the rods of the forks which provide the throwing into and out of gear of the speeds higher than the first speed are operated by motor means (MC) which actuate suitably shaped guides (19) along which the said rods slide following combined ways to sequentially actuate the said forks; said motor means, in their turn, are actuated by electronic processor means (21), to which there are further connected: sensor means (Sma, So, Sm) sensing the position of the gear lever (10), the speeds higher than the first speed (SI, SII, SIII, SIV, SV) which are thrown in by said motor, the speeds in output from the engine (Sne) and on the driving wheels, (Snu) the clutch (M) opening and closure position (Sfa, Sfc), respectively, the position of the foot brake (11) and accelerator pedals (12), as well as means (MF) actuating the opening and the closure of the clutch and the feeding member (15) which feeds the fuel to the engine; said processor means are such as to be able to carry out sequentially and in combination all the operations required to automatically obtain the shiftings during the parking and the movement of the vehicle.

- 1 -

Automatic control unit for controlling the gearbox of a vehicle

DESCRIPTION

The invention relates to an automatic control unit for controlling the gearbox of a vehicle.

More particularly, the invention relates to an automatic control unit for controlling the gearbox of a vehicle, of the type in which, while respecting the sequences of a normal gear shifting, these latter are actuated by electronic means connected to a microprocessor.

The known devices for the automatic control of the gearbox require to provide, downstream of the engine, an hydraulic torque converter and an epicyclical unit with three or four forward gears, with oil bath clutch for locking the gear.

These devices have the disadvantages consisting in having a low efficiency of the torque converter, power losses of the discs of the clutch in an oil bath and considerable manufacturing costs.

An object of the invention is to provide an automatic control unit for controlling a mechanical gearbox, which will reduce the controls in driving the vehicle, thus reducing the consumption of fuel.

Another object of the invention is to provide an automatic gearbox which will attain the same high efficiency of a manual type gearbox, thus avoiding the use of low efficiency means, such as the hydraulic torque converter peculiar to the known automatic gearboxes,which will enable also to program various driving manners, including the drive with low consumptions which result in being lower even than those obtainable with a manual control.

A further object of the invention is to propose an automatic control unit adapted to be applied on a

0155043

- 2 -

conventional manual gearbox without having to make considerable structural modifications to it, so  as to obtain low manufacturing costs.

Still according to the invention, the proposed automatic gearbox unit utilizes electric controls which require additional power sources, inasmuch as said controls exploit the feeding means existing on the vehicle.

To obtain these and other objects of the invention, which will be better understood later, the invention proposes to provide an automatic control unit for controlling the gearbox of a vehicle applied to a clash gear or constant mesh gearbox of conventional type and in which the selection of the neutral position, the reverse movement position and the first speed position is controlled manually, characterized in that the rods of the forks which carry out the throw in and the throw out of the speeds higher than the first speed are operated by motor means which actuate suitably shaped guides along which the said rods slide following combined ways to   sequentially actuate the said forks; said motor means, in their turn, being actuated by electronic processor means, to which there are further connected: sensor means sensing the position of the gear lever, the speeds higher than the first speed which are thrown in by said motor, the speeds in output from the engine and on the driving wheels, the clutch opening and closure position, respectively, the position of the foot brake and accelerator pedals, as well as means actuating the opening and the closure of the clutch and the feeding member which feeds the fuel to the engine; said processor means being such as to be able to carry out sequentially and in combination all the operations required to automatically obtain the shiftings during the parking and the movement of the vehicle.

- 3 -

The unit according to the inventio will now be described with reference to the annexed drawings, in which:

Fig. 1 is a schematic view of the unit according to the invention;

Fig. 2 is a view of the gearbox portion comprising the bars provided with the gearbox actuating forks;

Fig. 3 is a sectional view along the line III-III of Fig. 2, showing the gears of the gearbox;

Fig. 4 is a sectional view showing the member actuating the bars shown in Fig. 2;

Fig. 5 is a development in plane of the member shown in FIg. 4;

Fig. 6 is a sectional view along the line VI-VI of Fig. 7;

Fig. 7 is a sectional view showing the unit actuating the clutch;

Fig. 8 is a partially sectional view showing the unit actuating the fuel feeding member of the vehicle.

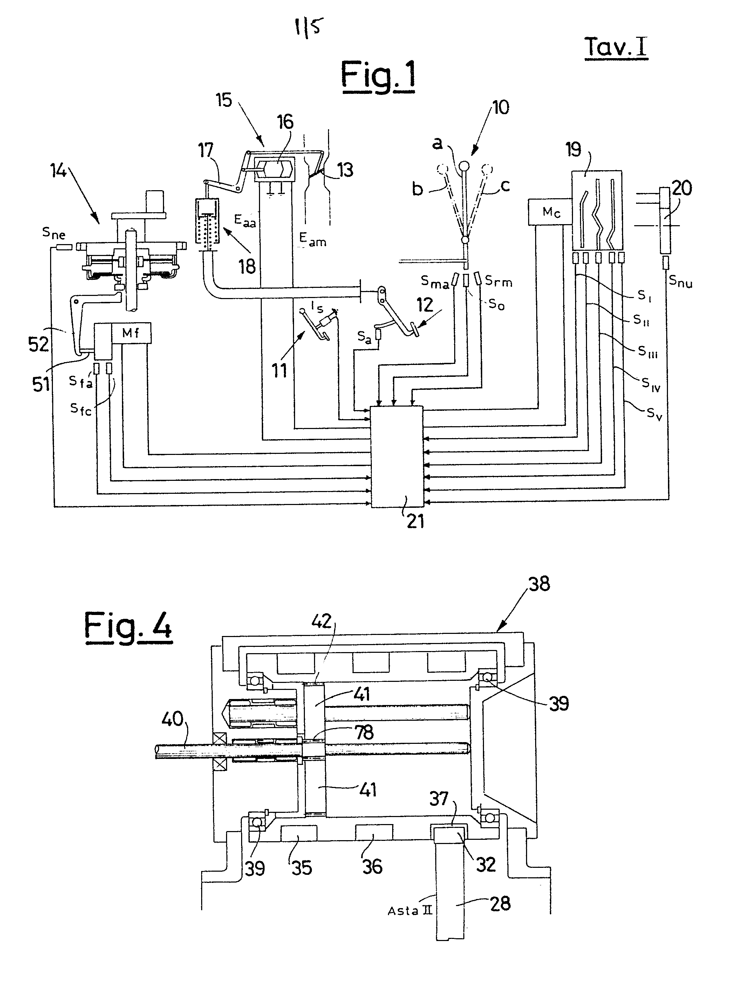

In the scheme of Fig. 1 the following members forming part of the gearbox automatic control unit according to the invention are visible:

- the lever 10 for the manual control of the gearbox, which lever assumes three positions, respectively: $\underline{a}$ (neutral position) connected to a selection sensor $S_o$; $\underline{b}$ (movement forwards) connected to a selection sensor $S_{ma}$; $\underline{c}$ (reverse movement) connected to a selection sensor $S_{rm}$

- the brake pedal 11, connected to a stop switch $I_s$ which controls the increase of the braking action of the engine

- the accelerator pedal 12, connected to a potentiometric sensor $S_a$ which indicates the opening magnitude of the throttle 13

- the clutch 14 actuated by a bidirectional motor $M_f$ which controls the closure and the opening of the clutch, with a reduction gear and a stop device (which will be discussed later) connected to a sensor $S_{fa}$ which indicates the opened state of the clutch, and a sensor $S_{fc}$ which indicates the closed state of the clutch

- the accelerator 15 with control electromagnet 16 controlling the linkage 17 made resilient at 18 (which will be described later), which allows to control the establishment of the slow running condition or the acceleration of the engine, whatever the position of the accelerator pedal 17 may be; the electromagnet is provided with a winding $E_{am}$ for setting up the slow running of the engine and a winding $E_{aa}$ for the acceleration

- the gearbox automatic control unit includes a bidirectional motor $M_c$ with a reduction gear for controlling the gear combining device 19 which performs the shifting, connected to the following sensors:

$S_I$ indicator of the combining device in speed I

$S_{II}$ indicator of the combining device in speed II

$S_{III}$ indicator of the combining device in speed III

$S_{IV}$ indicator of the combining device in speed IV

$S_V$ indicator of the combining device in speed V

- speed sensor $S_{nu}$ which measures the speed in output, on the axle 20 of the wheels and sensor $S_{ne}$ which measures the speed in output from the engine

- a microprocessor 21 which is connected to the sensors, the motors and the electromagnet, schematically decribed hereinabove.

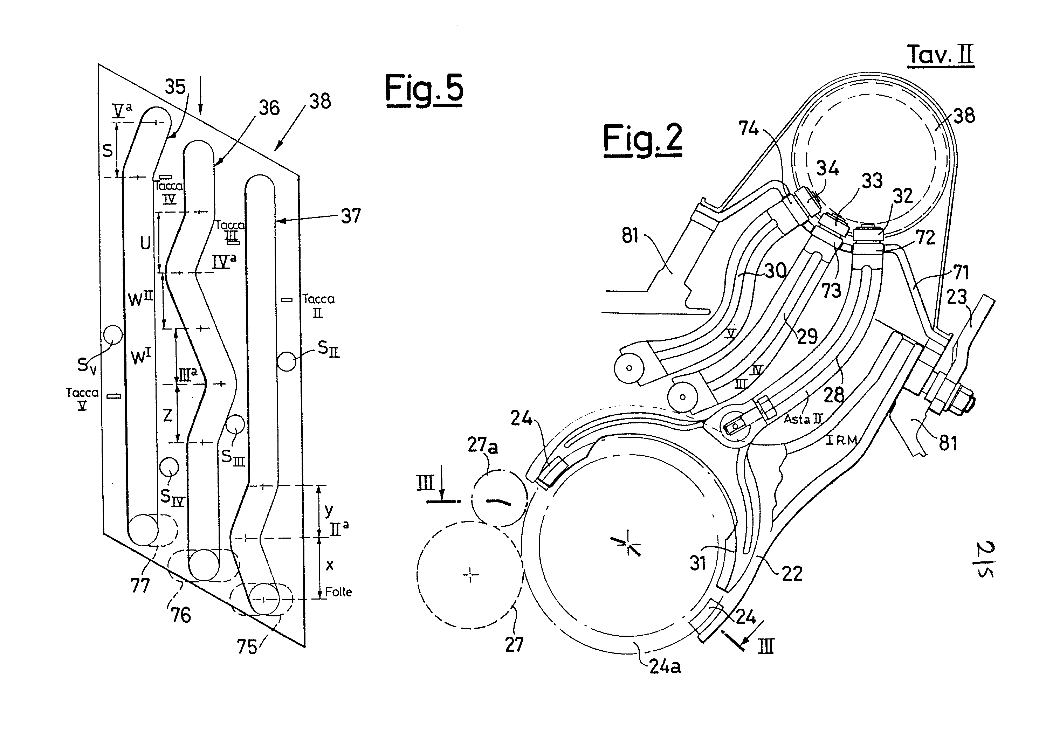

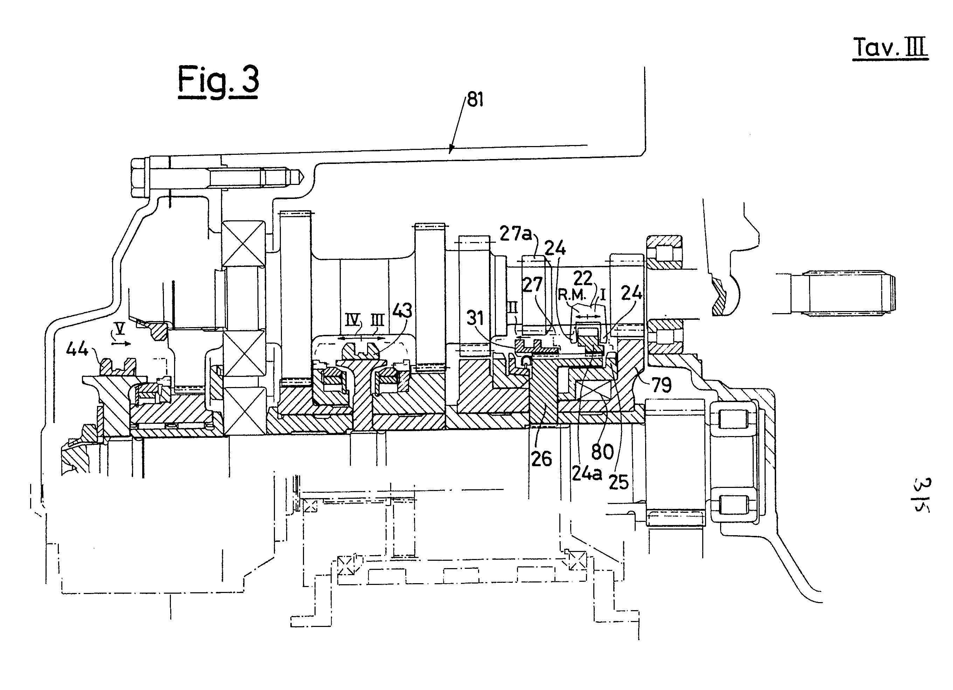

Visible in Fig. 2 is an arm 23 connected to the gearbox lever 10 by means of linkages (not shown), and to a fork 22 having prongs 24 supported thereon which operate a sleeve 24a provided with an external toothing and an inner groove and slidable on the hub 26; all this is shown in Fig. 3 in which the gearbox of the vehicle is represented.

The wheel 25 receives the motion from the lever 79 through the free wheel 80 indispensable for allowing the relative motion between the wheel 79 and the wheel 25 at the speeds higher than the first speed, the wheel 25 and the sleeve $24_a$ being always in mesh for said speeds.

In Fig. 3, the sleeve $24_a$ represented with full lines is in the neutral position; by manually acting on the lever 10 the fork 22 is traversed in the direction of the arrow I and makes mesh the inner groove of the sleeve $24_a$ with the wheel 25, thereby rigidly connecting this latter to the wheel 26 and engaging the first speed.

By acting, instead, on the lever 10 to traverse the fork in the direction of the arrow RM the sleeve $24_a$ is engaged with the toothing 27 of the complementary reverse wheel which at the same time meshes xith the wheel $27_a$ thus producing the reverse motion. (All this is visible in Figures 3 and 2).

Further inserted in the gear case 81 which supports the fork 22 are rods 28, 29 and 30 of respective forks, only the fork 31 of the rod 28 being shown, as they lie in different planes.

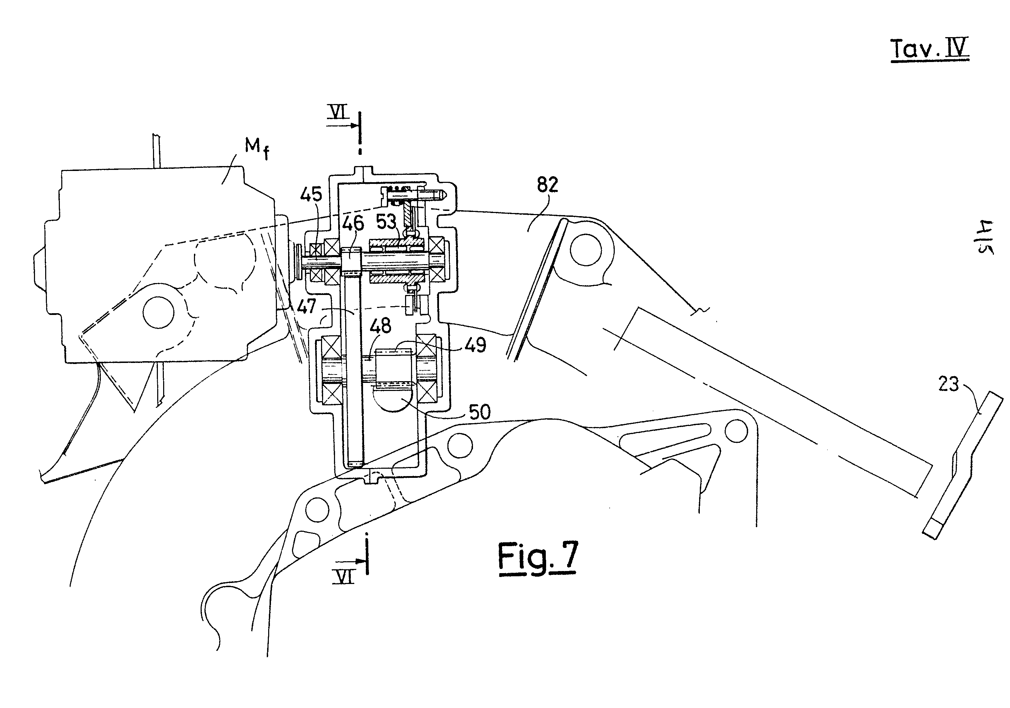

The ends 32, 33 and 34 of each rod which are opposite to those provided with the respective forks are slidably guided in respective circumferential grooves 35,36 and 37 of a drum 38 shown in axial cross-section in Fig.4 and in development in Fig. 5.

The parts 72, 73 and 74 of the rods 28, 29 and 30 slide within slots 75, 76 and 77 visible in Fig. 5 and formed on a reaction plate 71, fixed on the gear case 81.

The drum 38, mounted on bearings 39, is rotated by the motor $M_c$ (Fig. 1) whose shaft 40 supports a gear 78 on which the gears 41 are engaged which, in their turn, mesh with toothed portions 42 of the inner surface of the drum 38.

Shown in Fig. 3 are the sleeves 31, 43 and 44 in which the forks supported by the rods 28, 29 and 30, respectively, are engaged in a known manner.

Still in a known manner, when the fork is traversed in the direction of the arrow II the second speed is engaged; when the sleeve 43 is traversed in the direction of the arrow III or IV the third and the fourth speeds, respectively, are engaged; when the sleeve 44 is traversed in the direction of the arrow V the fifth speed is engaged.

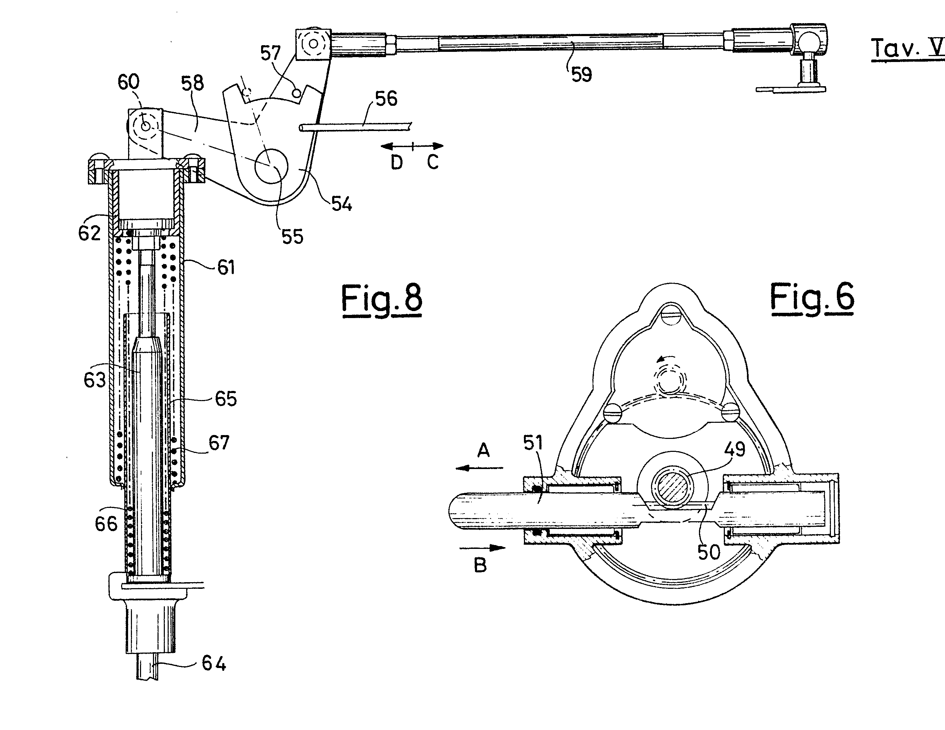

Figures 6 and 7 show the clutch operating unit which, as shown in Fig. 1, is controlled by the motor M whose shaft 45 supports a gear 46 which meshes with a redusction gear 46 keyed on an axle 48 toothed at 49, with which the rack portion 50 of a rod 51 pivoted to the linkage 52 (Fig. 1) controlling the clutch 14 engages.

Also mounted on the driving shaft 45 is a freewheel 53 whose fonction will be described later.

Diagrammatically shown in Fig. 7 is also the support 82 connecting the gear case and the engine.

Finally, Fig. 8 shows the accelerator control unit formed by a lever 54 pivoted at 55 and controlled by the electromagnet 16 (Fig. 1) through the rod 56.

The lever 54, rotating, acts on a pivot 57 of the lever 58 which is also pivoted at 55 and one end of which is connected to the throttle 13 through a transmission member 59, while the other end is pivotally connected at 60 to a jacket 61 slidable outside a tube 65; interposed between the two elements is a preloaded spring 67 which renders resilient the gearbox control.

Sliding inside the jacket is the guide bushing 6 operated by the cable 64 of the accelerator; in addition, disposed between the tube 65 and a guide stem 63 guiding the cable 64 is a return spring 66 for the accelerator 12.

- 7 -

When carrying out an acceleration, an action is exerted onto the cable 64 which entrains downwards the bushing 62; this latter compresses the spring 67 which, in its turn, entrains the jacket 61, which produces the rotation of the lever 58 which, through the transmission member 59, acts onto the throttle, thereby varying its opening. For automatically engaging the idling of the engine during the forward movement of the vehicle, the electromagnet, through the arm 56 and the lever 54 which acts onto the coaxial lever 58 by abutting on its pivot 57, entrains upwards the jacket 61 which compresses the spring 67 and therefore the bushing 62 remains stationary, thus avoiding the rebound onto the accelerator pedal, which in the meantime remains pressed.

The operation of the gearbox automatic control unit described hereinabove is as follows.

The starting of the engine can be carried out only when the gearbox lever is in the neutral position, and the sensor $S_a$ allows starting the engine when the clutch is closed, this condition being obtained by means of the processor 21 which actuates the motor $M_f$ which, through the kinematic mechanism 45 ÷ 50, traverses the rod 51 in the direction of the arrow B, and accordingly lever 52 closes the clutch 14.

After the ignition, the break-away of the vehicle forwards (speed I) or in reverse takes place by manually pushing the gearbox lever 10 to b or to c.

According to which position is selected, one of the sensord $S_{ma}$ (forward movement) or $S_{rm}$ (reverse movement) will close and will send current pulses to the motor $M_f$ to close the clutch 14, i.e. to traverse the rod 51 in the direction of the arrow B.

When the clutch is completely closed, sensor $S_{fc}$ results in being closed and the current is turned off from the motor $M_f$.

If, in the forward movement, in the speed I or in the reverse movement condition, it is necessary to stop the vehicle without turning off the engine, which happens, for example, when leaving a parking place, when the sensor $S_{nu}$ indicates a speed of the vehicle equal to or lower than a minimum value $S_{nu}$, and the pedal of the accelerator is released, i.e. the sensor $S_a$ is open, then the opening of the clutch is operated.

This maneuver of opening the clutch is performed by sending current to the motor $M_f$, as discussed already; the clutch will remain open thanks to the freewheel device 53 which stops the reverse movement, i.e. prevents the rod from traversing in the direction of the arrow B, which would cause the automatic closure of the clutch 14. Accordingly, the clutch may remain open even in any intermediate position with the motor in a non-energized condition.

In passing from the speed I controlled in an entirely manual manner, as described above, to the higher speeds (II, III, IV and V sequentially) the unit acts automatically without requiring any further manual intervention.

In fact, after having attained on the wheels the output speed $n_u$, to which the speed $n_e$ on the engine corresponds, for which, as a function of the opening $\alpha$ of the throttle, the ascending shifting has to take place, the processor 21 carries out the follwing passages sequentially:

a) it opens completely the clutch 14 by supplying current to the motor $M_f$, which acts as described above:

b) with a delay of $\Delta t$ seconds relative to the passage a) it actuates the shifting of the slow running by supplying current to the electromagnet $E_{am}$;

c) after the passage a) it supplies current to the motor $M_c$ to perform the ascending shilting and then interrupt the current when the respective sensor $S_{II}$ or $S_{III}$ or $S_{IV}$ or $S_V$ of the new speed is closed;

d) simultaneously with the sequence a) it continues maintaining the current to the slow speed shifting electromagnet $E_{am}$ and supplies current for the acceleration in order to raise the speed of the engine to the value $n_e = n_u \times \tau$, where $\tau$ is the ratio of the new speed;

e) after the sequences c) and d) have been completed at the end of the longer of these two sequences, a command is given to the motor $M_f$ to close the clutch 14.

As regards the passage b), the rod 56 of the electromagnet $E_{am}$ is traversed in the direction of the arrow C in Fig.8, thus allowing the rod 59 to reach the position shown in this Figure, which corresponds to the maximum closure of the throttle 13, i.e. to the slow speed of the engine.

This slow speed shifting condition determined by the electromagnet occurs also when the accelerator pedal is pressed thanks to the action of the preloaded spring 67 which opposes the pull of the accelerator cable 64.

As regards the passage c) it can be seen from Figures 1 ÷ 4 that the motor $M_c$ rotates the drum 38 through the gears 41 - 42 and 78, and the heads 32, 33 and 34 of the rods 28, 29, 30 are positioned by the respective grooves 37, 36 and 35 of the drum 38, in which they are housed. In other terms, since, as can be seen in Fig.5, the grooves are variously configured and undulated, when the drum is made to rotate, the rods 28, 29 and 30 will move on different parallel planes, so that the respective end forks will everytime give rise to a traverse movement of the sleeves 31, 43 and 44 in the various directions shown in Fig. 3, thereby carrying out the respective shiftings.

- 10 -

In the example shown in Fig. 5, starting from the neutral position at the bottom, rotating the drum, the head 32 of the rod 28, by sliding in the groove 37 along the oblique section $X$, will reach the position II in which the respective fork will have engaged the second speed. As the drum 38 continues rotating, with the clutch in the open condition as has been seen in the sequences described above, while the head 12 will slide along the oblique section $Y$ in the opposite direction relative to the preceding section $X$, thereby disengaging the speed II, it will be the head 33 of the rod 29 which, by sliding in the groove 36, having reached the oblique section $Z$, will permit its own fork to engage the third speed, thereby terminating the operation at the position III . By subsequently rotating the drum by means of the motor $M_c$, head 33, by sliding along the succesive section w' , will disengage the speed III to subsequently engage the speed IV in the successive section w" till reaching the position IV. This speed will be disengaged by accomplishing the rotation $u$ of the drum, on continuation of which it will be the rod 34 which, sliding in the groove 35, will insert the speed $V$ into the section $s$.

Slowing down the vehicle, the output speed $n_u$ will decrease, so that on attainment of the speed to which corresponds on the engine the speed $n_e$ for which, as a function of an opening $\alpha$ of the accelerator, the passage to the lower speed has to take place, the processor 21 gives rise to the beginning of the descending passage which takes place sequentially as follows:

a) it opens the clutch, as described above;

b) il positions the clutch into the idling condition, as described above;

c) it carries out the descending passage of speed by rotating the drum 38 in the direction opposite to that of the ascending passage, as described above;

d) at the same time, the synchronization of the engine is carried out by accelerating this latter by means of the electromagnet in the condition $E_{am}$ in such a manner that the ratio of the speeds will be $n_e = n_u \times \tau$, $\tau$ being the ratio of the new speed;

.e) closure of the clutch, as descibed above.

With the accelerator pedal 12 in the released condition, when it is desired to have a vigorous braking action from the engine, one exerts onto the brake pedal 11 a slight pressure sufficient to close the stop switch $I_f$, the closure of this switch modifies the law of the descending passage of speed, i.e. with $n_e$ peculiar to $\alpha$ max, while to speed II is maintained till the vehicle is stopped, and thereafter the manual passage to the speed I is performed.

- 1 -

C L A I M S

1.- An automatic control unit for controlling the gearbox of a vehicle, applied to a clash gear or constant mesh gearbox of conventional type and in which the selection of the neutral, reverse movement and first speed positions is controlled manually, characterized in that the rods of the forks which provide the throwing into and out of gear of the speeds higher than the first speed are operated by motor means which actuate suitably shaped guides along which the said rods slide following combined ways  to sequentially actuate the said forks; said motor means,in their turn, being actuated by electronic processor means, to which there are further connected: sensor means sensing the position of the gear lever, the speeds higher than the first speed which are thrown in by said motor, the speeds in output from the engine and on the driving wheels, the clutch  opening and closure positions, respectively, the position of the foot brake and accelerator pedals, as well as means actuating the opening and the closure of the clutch and the feeding member which feeds the fuel to the engine; said processor means being such as to be able to carry out sequentially and in combination all the operations required to automatically obtain the shiftings during the parking and the movement of the vehicle.

2.- A unit according to Claim 1, characterized in that the guides are formed along the periphery of a drum and have a substiantially sinusoidal development alternating with rectangular sections so as to alternately actuate the respective rods supporting the forks which sequentially engage said speeds.

3.- A unit according to Claim 1, characterized in that the clutch is actuated by said motor means through a linkage and that between them there is interposed a stop freewheel for stopping the linkage in the opened position of the clutch, with the sais motor means being inactive.

4.- A unit according to Claim 1, characterized in that the setting on the lowest speed of the member supplying the fuel to the engine is carried out by an electromagnet connected to said electronic processor.

5.- A unit according to Claim 4, characterized in that the electromagnet is kinematically connected to the linkage of the feeding member, which is operatively connected to a jacket sliding outside a tube against the action of a preloaded resilient means; in the jacket being further included a sliding a guide bushing operated by the cable of the accelerator; between the cable and the tube being interposed a resilient return member for the return of the accelerator cable.

6.- A unit according to Claim 5, characterized in that the electromagnet, when it is actuated to perform the setting of the engine in the lowest speed, accordingly acts on the linkage of the feeding member and at the same time entrains the jacket to compress the said preloaded resilient means, maintaining stationary the bushing and avoiding any rebound on the pedal of the accelerator.

7.- A unit according to Claim 1, characterized in that the fork connected to the control rod which controls the first speed and the reverse movements alternatively actuates a sleeve which at the speeds higher than the first speed is always in mesh with a first gear mounted through a freewheel on a second gear which, in its turn, is idle on the secondary shaft, so as to allow the relative movement between the said gear when the engine operates at the speeds higher than the first speed.

8.- A unit according to Claim 1, characterized in that the processor means are formet by a microprocessor.

1|5

# Fig.1

# Fig.4

**Fig.5**

**Fig.2**

**Tav. II**

2|5

0155043

Fig.3

Tav. IV

Fig.7

**Fig. 8**

**Fig. 6**

57

60    58    56

D    C

54

55

62

61

63

65

67

66

64

A    51    49

B    50

59

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | US-A-3 876 028 (AISIN SEIKI K.K.) * Figures 1-17; column 1, line 44 - column 2, line 44 * | 1 | B 60 K 41/08 B 60 K 41/28 G 05 G 9/08 F 16 H 5/66 |
| A | --- | 4-6 | |
| A | FR-A- 835 646 (A. CORDERA) * Whole document * --- | 2,3 | |
| A | GB-A-2 018 917 (NISSAN MOTOR CO.) * Figures 2-6; page 2, lines 30-47; claims * --- | 1,3-6, 8 | |
| A | FR-A-2 268 997 (A.F. FLENDER & CO.) * Page 4; figures 1-3 * --- | 2 | TECHNICAL FIELDS SEARCHED (Int. Cl.4) |
| A | US-A-2 523 783 (H.O. SCHJOLIN) * Column 4, line 57 - column 5, line 15; claims 1-3; figures 1-17 * --- | 4-7 | B 60 K F 16 H G 05 G |
| A | CH-A- 204 422 (E. VUILLEUMIER) * Whole document * ----- | 2 | |

The present search report has been drawn up for all claims

| Place of search THE HAGUE | Date of completion of the search 26-04-1985 | Examiner VOGT-SCHILB G.J.F. |
|---|---|---|